# EUROPÄISCHE PATENTSCHRIFT

(11) **EP 2 895 362 B1**
(45) Veröffentlichungstag und Bekanntmachung des Hinweises auf die Patenterteilung: **11.11.2020**
(21) Anmeldenummer: 13762495.3
(22) Anmeldetag: 16.09.2013
(51) Int. Cl.: B60T 7/12, B60T 13/68

(54) **BREMSTEUEREINRICHTUNG FÜR EIN NUTZFAHRZEUG MIT EINEM ANHÄNGER**
BRAKE CONTROL SYSTEM FOR A UTILITY VEHICLE HAVING A TRAILER
DISPOSITIF DE COMMANDE DE FREINS DESTINÉ À UN VÉHICULE UTILITAIRE ÉQUIPÉ D'UNE REMORQUE

(30) Priorität: 17.09.2012 DE 102012108702
(43) Veröffentlichungstag der Anmeldung: 22.07.2015
(73) Patentinhaber: KNORR-BREMSE Systeme für Nutzfahrzeuge GmbH, 80809 München (DE)
(72) Erfinder: HECKER, Falk, 71706 Markgröningen (DE); WIEDER, Gerhard, 74354 Besigheim (DE); MUSTAPHA, Adnan, 75433 Maulbronn (DE)
(86) Internationale Anmeldenummer: PCT/EP2013/069116
(87) Internationale Veröffentlichungsnummer: WO 2014/041154

(56) Entgegenhaltungen:
- DE-A1-102007 008 504
- DE-A1-102008 002 584
- US-A1- 2010 168 974

## Beschreibung

Die Erfindung betrifft allgemein Fahrzeuge und insbesondere Nutzfahrzeuge. Weiterhin betrifft die Erfindung eine Bremssteuereinrichtung für ein Nutzfahrzeug mit einem Anhänger.

In der DE 10 2010 039 301 A1 ist eine Steigungsanfahrhilfe, auch HSA für hill start aid genannt, beschrieben. Eine derartige Steigungsanfahrhilfe unterstützt einen Fahrer eines Nutzfahrzeuges beim Anfahren an Steigungen, der gleichzeitig mit der Fußbremse das Fahrzeug halten, Gasgeben und die Kupplung betätigen muss. Die DE 10 2007 008 504 A1 offenbart eine Bremssteuereinrichtung gemäß dem Oberbegriff des Anspruchs 1.

Es ist Aufgabe der Erfindung, eine verbesserte Steigungsanfahrhilfe zu schaffen.

Die Aufgabe wird durch die Merkmale der unabhängigen Ansprüche gelöst. Bevorzugte Weiterbildungen sind Gegenstand der abhängigen Ansprüche.

Gemäß einem Aspekt der Erfindung umfasst eine Bremssteuereinrichtung für ein Nutzfahrzeug mit einem Anhänger:
- eine pneumatische Bremssteuerschaltung mit einem Fahrzeugdruckpfad zum Ausgeben eines Bremsdruckes an eine das Nutzfahrzeug abbremsende Fahrzeugbremse basierend auf einer Sollvorgabe eines Fahrers des Nutzfahrzeuges und mit einem Anhängerdruckpfad zum Ausgeben des Bremsdruckes an eine den Anhänger abbremsende Anhängerbremse basierend auf der Sollvorgabe, und
- eine pneumatische Anfahrhilfsschaltung zum Ausgeben eines weiteren Bremsdruckes an eine Anhängerbremse des Anhängers basierend auf einer Geschwindigkeit des Nutzfahrzeuges,
- wobei die pneumatische Anfahrhilfsschaltung mit dem Anhängerdruckpfad der pneumatischen Bremssteuerschaltung pneumatisch verbunden ist.

Der angegebenen Bremssteuereinrichtung liegt die Überlegung zugrunde, dass die eingangs genannte Steigungsanfahrhilfe über das Antiblockiersystem, ABS genannt, und/oder die Antischlupfregelung, ASR genannt, betrieben werden könnte, die nur im Zugfahrzeug jedoch nicht Anhänger vorhanden sind. Aus technischen Gründen sollte im Rahmen der Steigungsanfahrhilfe nur die Antriebsachse gebremst werden, wodurch die Steigungsanfahrhilfe jedoch bei größeren Steigungen und bei schweren Beladungen relativ schnell an ihre Grenzen kommt, was sich darin äußern kann, dass ein eingesteuerter Bremsdruck ausschließlich an der Antriebsachse nicht ausreicht, um das Fahrzeug zu halten, so dass das Fahrzeug zurückrollen könnte.

Daher wird im Rahmen der angegebenen Bremssteuereinrichtung vorgeschlagen, den Bremsdruck, der an der Antriebsachse für die Steigungsanfahrhilfe aufgebaut wird, auch an den Anhänger weiter zu leiten, so dass auch der Anhänger mitgebremst wird und somit bei größeren Steigungen und Lasten gehalten werden können. Auf diese Weise wäre eine Absenkung des Bremsdruckniveaus möglich, da der Anhänger seine Last selbst bremst, wodurch sich auch ein reduzierter Stress für nachgeschaltete Komponenten des Bremssystems des Nutzfahrzeuges und reduzierter Luftverbrauch erreichen lässt.

In einer Weiterbildung umfasst die angegebene Bremssteuereinrichtung ein Wechselventil zum Ausgeben des Bremsdruck oder des weiteren Bremsdruckes an die Anhängerbremse basierend auf deren Höhe. Unter einem Wechselventil, das auch als "Select High Ventil" bekannt ist, werden zwei Rückschlagventile verstanden, die entgegen ihrer Rückschlagrichtung antiseriell zusammengeschaltet sind. Damit wird ein Druckluftfluss vom gemeinsamen Anschluss der beiden Rückschlagventile zu den jeweils verbleibenden getrennten Anschlüssen der beiden Rückschlagventile vermieden in der Gegenrichtung jedoch zugelassen. Das Wechselventil garantiert somit einen Druckluftfluss ausschließlich vom Fahrzeugdruckpfad oder der Anfahrhilfsschaltung in den Anhängerdruckpfad, nicht jedoch in irgendeine andere Richtung.

In einer besonderen Weiterbildung umfasst die angegebene Bremssteuereinrichtung ein Druckventil, das zur Einstellung einer Höhe des weiteren Bremsdruckes vorgesehen ist. Dieses Druckventil kann beispielsweise als Stellglied eines Regelkreises ausgebildet sein, das die Höhe des Bremsdruckes basierend darauf einstellt, ob sich das Nutzfahrzeug bewegt, so dass im Rahmen der Steigungsanfahrhilfe zum Halten des Nutzfahrzeuges immer ein minimal notwendiger Bremsdruck eingestellt wird. In besonders günstiger Weise wird dabei der minimal notwendige Druck durch die angegebene Bremssteuereinrichtung reduziert, da der Anhänger aktiv mit an der Bremsung mitbeteiligt ist, so eine niedrigere Gesamtkraft zum Bremsen des Nutzfahrzeuges mit dem Anhänger notwendig ist, was sich in einer automatischen Anpassung des Bremsdruckes innerhalb des Regelkreises niederschlägt.

In einer bevorzugten Weiterbildung der angegebenen Bremssteuereinrichtung ist das Druckventil ein Stellglied einer Antischlupfregelung, was einen vielseitigeren Einsatz dieses ASR-Stellgliedes zulässt.

In einer anderen Weiterbildung umfasst die angegebene Bremssteuereinrichtung ein Schaltelement, das eingerichtet ist, den weiteren Bremssteuerdruck zur Fahrzeugbremse weiterzuleiten.

Dieses Schaltelement kann einerseits eingerichtet sein, zwei Antiblockiersystemventile an zwei Fahrzeugbremsen einer Achse des Nutzfahrzeuges gleichzeitig anzusteuern. Zusammen mit dem ASR-Ventil ist die Steigungsanfahrhilfe somit in das ABS/ASR-System des Nutzfahrzeuges mit integriert.

In besonders günstiger Weise ist dabei ein Doppelabsperrventil eingerichtet, den weiteren Bremsdruck zwischen der Bremssteuerschaltung und der Anfahrhilfsschaltung über die pneumatische Verbindung zu leiten, wenn der weitere Bremsdruck an die zwei Fahrzeugbremsen gleichzeitig angelegt ist. Unter einem Doppelabsperrventil, auch "Select Low Ventil" genannt, soll nachstehend ein Ventil mit zwei Eingängen und einem Ausgang verstanden werden, dass aus zwei an den Eingängen anliegenden Drücken den niedrigeren der beiden Drücke auswählt. Im Normalbetrieb des ABS/ASR-Systems, wenn nur beide Fahrzeugräder individuell abgebremst werden und sich so der Bremsdruck an den Eingängen des Doppelabsperrventils unterscheidet, verhindert das Doppelabsperrventil eine Weiterleitung von Bremsdruck in den Anhängerdruckpfad. Dies geschieht nur, wenn im Rahmen der Steigungsanfahrhilfe beide Fahrzeugräder vom ABS synchron angesteuert, so dass an den Eingängen des Doppelabsperrventils derselbe Bremsdruck anliegt, der dann an den Anhängerdruckpfad weitergeleitet werden kann. Auf diese Weise werden die ASR-Funktion und die Steigungsanfahrhilfe voneinander getrennt gehalten und beeinflussen sich nicht gegenseitig. Wird das Nutzfahrzeug als Zugfahrzeug des Anhängers dreiachsig aufgebaut, ist ein derartiges Doppelabsperrventil zur Weiterleitung des Druckes ohnehin vorhanden, so dass sich die angegebene Bremssteuereinrichtung in einfacher Weise aus einer herkömmlichen Bremssteuereinrichtung plus einem Wechselventil, einem Abzweigstück nach dem Doppelabsperrventil und wenigen Metern Druckluftleitung aufbauen lässt.

In einer alternativen oder zusätzlichen Weiterbildung der angegebenen Bremssteuereinrichtung umfasst das Schaltelement ein Wechselventil, das eingerichtet ist, den weiteren Bremsdruck auszuwählen. Dieser Weiterbildung liegt die Überlegung zugrunde, dass eine Integration der Steigungsanfahrhilfe in das ABS-System des Fahrzeuges den Fahrzeugdruckpfad praktisch wirkungslos macht, wenn die Steigungsanfahrhilfe eingreift. Der Fahrer des Nutzfahrzeuges hat dann keine Möglichkeit mehr, den Bremsdruck weiter zu erhöhen, da die ABS-Ventile im Fahrzeugdruckpfad liegen. Diesem Nachteil wird dadurch begegnet, dass der Bremsdruck für die Steigungsanfahrhilfe aus einem anderen Druckpfad ausgewählt wird, als der Druck für das ABS-System.

In einer bevorzugten Weiterbildung der angegebenen Bremssteuervorrichtung ist das Schaltelement eingerichtet, zwischen einem Antischlupfregeldruck und einem reduzierten Antischlupfregeldruck auszuwählen.

Gemäß einem weiteren Aspekt der angegebenen Erfindung umfasst ein Nutzfahrzeug ein Fahrzeugrad, eine Fahrzeugbremse zum Abbremsen des Fahrzeugrades und eine angegebene Bremssteuereinrichtung zum Ansteuern der Fahrzeugbremse. An das Nutzfahrzeug kann ein Anhänger angeschlossen werden, an der dann nicht nur bei einer Bremsbetätigung des Fahrers sondern auch bei einem Bremseingriff durch die Steigungsanfahrhilfe abgebremst wird. Der Anhänger muss jedoch nicht zwingend an das angegebene Nutzfahrzeug angehängt sein.

Die oben beschriebenen Eigenschaften, Merkmale und Vorteile dieser Erfindung sowie die Art und Weise, wie diese erreicht werden, werden klarer und deutlicher verständlich im Zusammenhang mit der folgenden Beschreibung der Ausführungsbeispiele, die im Zusammenhang mit den Zeichnungen näher erläutert werden, wobei:
Fig. 1 ein zweikreisiges Bremssystem eines Nutzfahrzeuges mit einer Vorderachse und zwei Hinterachsen,
Fig. 2 den zweiten Bremskreis aus Fig. 1 gemäß einer ersten Ausführung, und
Fig. 3 den zweiten Bremskreis aus Fig. 1 gemäß einer zweiten Ausführung zeigen.

In den Figuren werden gleiche technische Elemente mit gleichen Bezugszeichen versehen und nur einmal beschrieben.

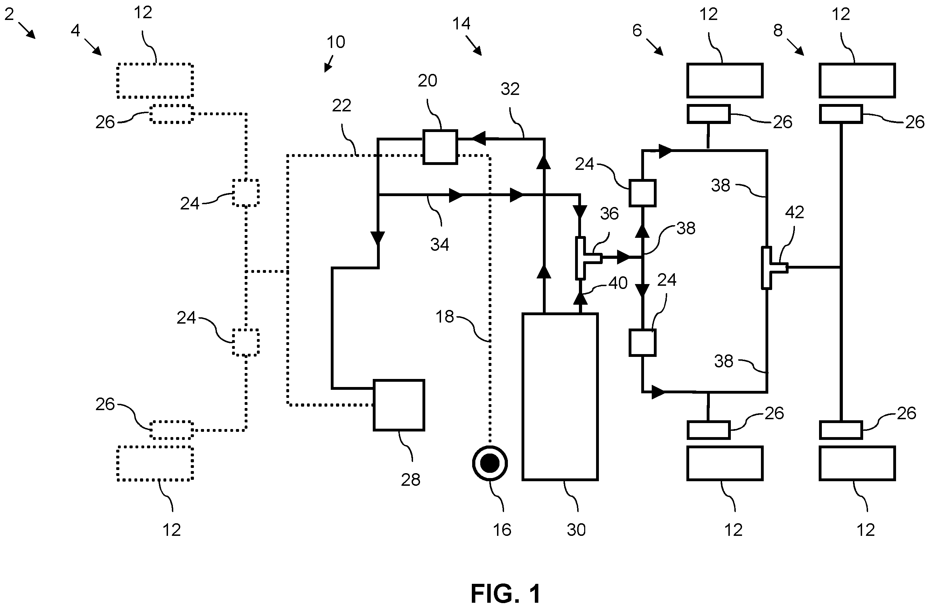

Es wird auf Fig. 1 Bezug genommen, die ein zweikreisiges Bremssystem 2 eines nicht ausführlich dargestellten Nutzfahrzeuges mit einer Vorderachse 4 und zwei Hinterachsen 6, 8 zeigt. Dabei liegt die erste Hinterachse 6 von der Vorderachse 4 aus gesehen vor der zweiten Hinterachse 8. Das Nutzfahrzeug kann auch zweiachsig aufgebaut sein, worauf an den entsprechend relevanten Stellen in der nachstehenden Beschreibung näher eingegangen wird.

In der vorliegenden Ausführung umfasst das zweikreisige Bremssystem 2 einen ersten Bremskreis 10 zum Abbremsen der Räder 12 an der Vorderachse 4, das in Fig. 1 durch gepunktete Linien angedeutet ist. Ein zweiter Bremskreis 14 des zweikreisigen Bremssystems 2, der in den Figuren mit durchgezogenen Linien angedeutet ist, ist zum Abbremsen der Räder 12 an den beiden Hinterachsen 6, 8 vorgesehen. In der vorliegenden Ausführung werden der Einfachheit halber Steuerbremsdrücke und Versorgungsbremsdrücke zu einem Bremsdruck zusammengefasst. Diese Zusammenfassung hat jedoch keinen Einfluss auf das Wirkprinzip der Erfindung.

Der erste Bremssteuerkreis 10 wird aus einer Druckquelle 16 mit einem ersten pneumatischen Quelldruck 18 versorgt. Dieser erste pneumatische Quelldruck 18 wird über ein durch einen Fahrer des Nutzfahrzeuges betätigbares Stellglied 20, das nachstehend als Bremspedal 20 angesehen werden soll, auf einen ersten pneumatischen Bremsdruck 22 in einer dem Fachmann bekannten Weise eingestellt. Der erste pneumatische Bremsdruck 22 wird abschließend über noch zu beschreibende ABS-Ventile 24 an Bremsen 26 abgegeben, die die Räder 12 der Vorderachse 4 abbremsen sollen. Zusätzlich wird der erste pneumatische Bremsdruck 22 an eine Anhängerschnittstelle 28 angelegt, um nicht gezeigte Bremsen eines einen an das Nutzfahrzeug angeschlossenen Anhänger zu betätigen. Die Anhängerschnittstelle 28 ist derart ausgebildet, dass kein Druckverlust auftritt, wenn kein Anhänger an das Nutzfahrzeug angeschlossen ist.

Der zweite Bremssteuerkreis 14 wird in der vorliegenden Ausführung aus einer noch zu beschreibenden Quelldruckschaltung 30 mit einem zweiten pneumatischen Quelldruck 32 versorgt, der vom ersten pneumatischen Quelldruck 18 unabhängig ist. Wie im ersten Bremssteuerkreis 10 wird der zweite pneumatische Quelldruck 32 über das Bremspedal 20 auf einen zweiten pneumatischen Bremsdruck 34 eingestellt, der dann in einer noch zu beschreibenden Weise zur Ansteuerung der Bremsen 26 der Räder 12 an den beiden Hinterachsen 6, 8 verwendet werden kann. Zudem wird der zweite pneumatische Bremsdruckes 34 wieder an die Anhängerschnittstelle 28 angelegt. Auf diese Weise ist ein zweikreisiges Bremssystem 2 geschaffen, mit dem der Fahrer das Nutzfahrzeug selbst dann noch abbremsen kann, wenn in einem der beiden Bremskreise 10, 14 ein Druckverlust auftritt.

Der zweite pneumatische Bremsdruck 34 wird an ein Wechselventil 36 angelegt, dass einen pneumatischen Ansteuerdruck 38 zwischen dem pneumatischen Bremsdruck 34 und einem ASR-Bremsdruck 40 je nachdem auswählt, welcher der beiden Drücke höher ist. Der ASR-Bremsdruck 40 wird im Rahmen einer an sich bekannten Antischlupfregelung, auch Traktionskontrolle genannt, ausgegeben, der vom durch den Fahrer über das Bremspedal 20 vorgegebenen zweiten pneumatischen Bremsdruck 34 unabhängig sein muss. Der ausgewählte pneumatische Ansteuerdruck 38 wird dann wieder über die noch zu beschreibenden ABS-Ventile 24 an die Bremsen 26 der Räder 12 der ersten Hinterachse 6 angelegt.

Die zweite Hinterachse 8 ist, wie bereits beschrieben, optional. Ist die zweite Hinterachse 8 vorhanden, werden die von den ABS-Ventilen 24 ausgegebenen pneumatischen Ansteuerdrücke 38 an ein Doppelabsperrventil 42 angelegt, das von diesen beiden pneumatischen Ansteuerdrücken 38 immer den kleineren der beiden pneumatischen Ansteuerdrücke 38 an die Bremsen 26 der Räder 12 der zweiten Hinterachse 8 anlegt.

Die ABS-Ventile 24 sind Teil eines dem Fachmann an sich bekannten Antiblockiersystems. Dieses ist ausgebildet, durch eine selektive Ansteuerung der einzelnen Bremsen 26 ein Blockieren dieser zu verhindern. Aus diesem Grund ist auch in Druckrichtung vor jeder Bremse der Vorderachse 4 und der ersten Hinterachse 6 ein ABS-Ventil 24 angeordnet. Greift das Antiblockiersystem in einen Bremsvorgang an der ersten Hinterachse 6 ein, dann werden die beiden Bremsen 26 an der ersten Hinterachse 6 über die ABS-Ventile 24 mit unterschiedlich hohen pneumatischen Ansteuerdrücken 38 beaufschlagt, die über das Doppelabsperrventil 42 voneinander getrennt werden, sollte die zweite Hinterachse 8 vorhanden sein. An die Bremsen 26 der zweiten Hinterachse 8 wird dann der niedrigere der beiden pneumatischen Ansteuerdrücke 38 ausgegeben. Auf einen normalen Bremsvorgang ohne ABS-Eingriff hat dies keinen Einfluss, da an dem Doppelabsperrventil 42 dann gleich große pneumatische Ansteuerdrücke 38 anliegen, die wenn überhaupt nur eine verschwindend kleine Druckdifferenz aufweisen.

Im Rahmen der vorliegenden Ausführung kann mit dem zweiten Bremskreis 14 auch eine Steigungsanfahrhilfe umgesetzt werden, die das Nutzfahrzeug im Stand an einer Steigung mittels den Bremsen 26 festhält und die Bremsen 26 löst, sobald der Fahrer des Nutzfahrzeuges dieses beschleunigt. Die Steigungsanfahrhilfe kann die Bremsen 26 der ersten Hinterachse 6 und gegebenenfalls auch der zweiten Hinterachse 8, wenn diese vorhanden ist, schließen, wenn das Nutzfahrzeug eine vorbestimmte Geschwindigkeit beispielsweise von Null unterschreitet und öffnen, wenn das Nutzfahrzeug beispielsweise mit einem Drehmoment einer vorbestimmten Höhe bewegt werden soll.

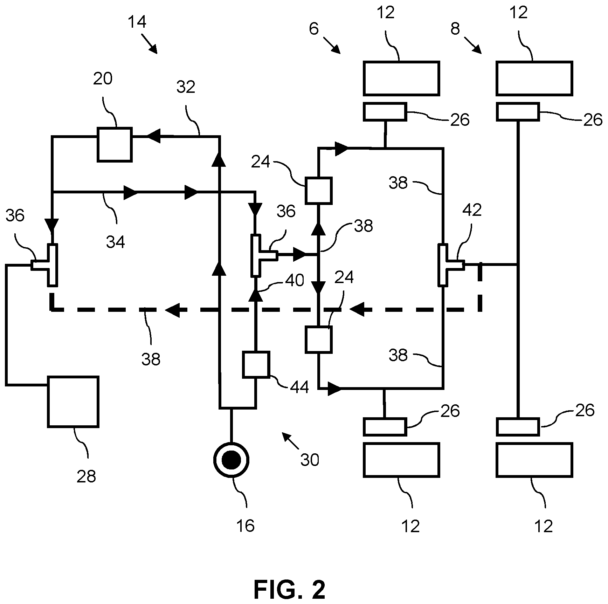

Es wird auf Fig. 2 Bezug genommen, die den zweiten Bremskreis 14 aus Fig. 1 mit einer ersten Ausführung der Steigungsanfahrhilfe zeigt.

In der vorliegenden Ausführung wird die Steigungsanfahrhilfe mit den ABS-Ventilen 24 umgesetzt. Dazu weist die in Fig. 1 nur schematisch dargestellte Quelldruckschaltung 30 eine Druckquelle 16 die den zweiten pneumatischen Quelldruck 32 ausgibt. Ferner wird der zweite pneumatische Quelldruck auch an ein ASR-Ventil 44 angelegt, das den zweiten pneumatischen Quelldruck 32 im Rahmen der oben genannten Antischlupfregelung in den ASR-Druck 40 umwandelt.

Bei einem Eingriff der Steigungsanfahrhilfe, der vom Bremspedal 20 unabhängig erfolgen soll, gibt das ASR-Ventil 44 den pneumatischen Druck als pneumatischen Ansteuerdruck 38 für die Steigungsanfahrhilfe unabhängig vom Bremspedal 20 vor. Über die ABS-Ventile 24 wird dann der pneumatische Ansteuerdruck 38 in einer geeigneten Höhe, mit der der das Nutzfahrzeug sicher an der Steigung gehalten werden kann, an beiden Bremsen 26 gleichzeitig eingestellt.

In der vorliegenden Ausführung soll der pneumatische Ansteuerdruck 38 im Falle eines Bremseingriffes durch die Steigungsanfahrhilfe zur Anhängerschnittstelle 28 geleitet werden. Dazu ist das Doppelabsperrventil 42 unabhängig davon angeordnet, ob die zweite Hinterachse 8 vorhanden ist, oder nicht. Das Doppelabsperrventil 42 trennt die beiden Bremsen 26 der ersten Hinterachse 6 pneumatisch voneinander, wenn ein gewöhnlicher ABS-Eingriff erfolgt, leitet den pneumatischen Ansteuerdruck 38 jedoch über eine in Fig. 2 gestrichelt dargestellte Leitung an die Anhängerschnittstelle 28, wenn die Bremsen 26 im Rahmen eines gewöhnlichen Bremseingriffes oder des Bremseingriffs durch die Steigungsanfahrhilfe angesteuert werden.

Zwischen dem Bremspedal 20 und der Anhängerschnittstelle 28 kann in der vorliegenden Ausführung ein Wechselventil 36 angeordnet sein, das entweder den zweiten pneumatischen Bremsdruck 34 oder den pneumatischen Ansteuerdruck 38 an die Anhängerschnittstelle 28 weiterleitet, je nachdem, welches der beiden Drücke größer ist.

Insofern wäre für die Umsetzung der vorliegenden Ausführung lediglich die zusätzliche in Fig. 2 gestrichelt dargestellte pneumatische Leitung sowie das Wechselventil 36 notwendig, um den pneumatischen Ansteuerdruck 38 im Rahmen der Steigungsanfahrhilfe auch an den Anhänger des Nutzfahrzeuges weiterzuleiten. Wenn das Nutzfahrzeug keine zweite Hinterachse 8 aufweist, wäre zudem ein zusätzliches Doppelabsperrventil 42 notwendig.

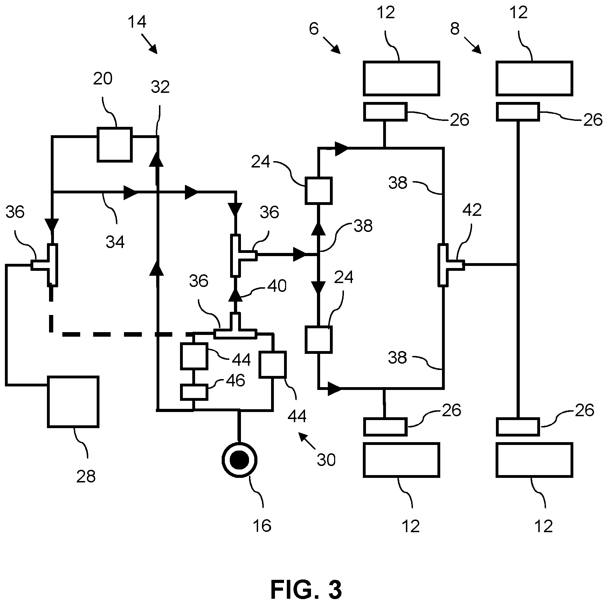

Es wird auf Fig. 3 Bezug genommen, die den zweiten Bremskreis 14 aus Fig. 1 mit einer ersten Ausführung der Steigungsanfahrhilfe zeigt.

In der vorliegenden Ausführung wird die Steigungsanfahrhilfe mit einem Druckbegrenzer 46 umgesetzt, der den zweiten pneumatischen Quelldruck 32 begrenzt und in ein für die Steigungsanfahrhilfe eigens vorgesehenes ASR-Ventil 44 leitet. Der begrenzte Druck aus dem entsprechenden ASR-Ventil 44 und der unbegrenzte Druck aus den anderen ASR-Ventil 44 werden an einem zusätzlichen Wechselventil 36 gegenübergestellt und der höhere Druck von beiden dann in der oben beschriebenen Weise weiter in den pneumatischen Ansteuerdruck 38 umgesetzt. Es liegt an dem zusätzlich eingebrachten Wechselventil 36 entweder der eine pneumatische Druck oder der andere pneumatische Druck an.

In der vorliegenden Ausführung wird der durch den Druckbegrenzer 46 begrenzte Ausgangsdruck aus dem entsprechenden ASR-Ventil 44 an das in Fig. 2 zusätzlich eingebrachte Wechselventil 36 über eine in Fig. 3 gestrichelt dargestellte Leitung ausgegeben. An dieser Stelle ist auch der Hintergrund des Wechselventils 36 zwischen den beiden ASR-Ventilen 44 ersichtlich, das eine Ausgabe eines pneumatischen Druckes an die Anhängerschnittstelle 28 verhindert, wenn ein gewöhnlicher ASR-Eingriff erfolgt.

Zwar ist die vorliegende Ausführung technisch gesehen aufwendiger, als die Ausführung der Fig. 2, der Vorteil der vorliegenden Ausführung ist aber, dass die Steigungsanfahrhilfe unabhängig von den ABS-Ventilen 24 ausgebildet wird, so dass diese also nicht angesteuert (und gestresst) werden müssen.

## Patentansprüche

1. Bremssteuereinrichtung (14) für ein Nutzfahrzeug mit einem Anhänger, umfassend:
- eine pneumatische Bremssteuerschaltung mit einem Fahrzeugdruckpfad zum Ausgeben eines Bremsdruckes (34, 38) an eine das Nutzfahrzeug abbremsende Fahrzeugbremse (26) basierend auf einer Sollvorgabe (20) eines Fahrers des Nutzfahrzeuges und mit einem Anhängerdruckpfad (28) zum Ausgeben des Bremsdruckes (34) an eine den Anhänger abbremsende Anhängerbremse basierend auf der Sollvorgabe (20), und
- eine pneumatische Anfahrhilfsschaltung (42, 44) zum Ausgeben eines weiteren Bremsdruckes (40) an eine Anhängerbremse des Anhängers basierend auf einer Geschwindigkeit des Nutzfahrzeuges,
**dadurch gekennzeichnet, dass**
- die pneumatische Anfahrhilfsschaltung (42, 44) mit dem Anhängerdruckpfad (28) der pneumatischen Bremssteuerschaltung pneumatisch verbunden ist.

2. Bremssteuereinrichtung (14) nach Anspruch 1, umfassend ein Wechselventil (36) zum Ausgeben des Bremsdruck (34, 38) oder des weiteren Bremsdruckes (38, 40) an die Anhängerbremse basierend auf deren Höhe.

3. Bremssteuereinrichtung (14) nach Anspruch 1 oder 2, wobei die Anfahrhilfsschaltung (42, 44) ein Druckventil (44) umfasst, das zur Einstellung einer Höhe des weiteren Bremsdruckes (38, 40) vorgesehen ist.

4. Bremssteuereinrichtung (14) nach Anspruch 3, wobei das Druckventil (44) ein Stellglied einer Antischlupfregelung ist.

5. Bremssteuereinrichtung (14) nach einem der vorstehenden Ansprüche, umfassend ein Schaltelement (24, 36), das eingerichtet ist, den weiteren Bremssteuerdruck (38, 40) zur Fahrzeugbremse (26) weiterzuleiten.

6. Bremssteuereinrichtung (14) nach Anspruch 5, wobei das Schaltelement (24, 36) eingerichtet ist, zwei Antiblockiersystemventile (24) an zwei Fahrzeugbremsen (26) einer Achse (6) des Nutzfahrzeuges gleichzeitig anzusteuern.

7. Bremssteuereinrichtung (14) nach einem der Ansprüche 5 oder 6, wobei das Schaltelement (24) ein Wechselventil umfasst, das eingerichtet ist, den weiteren Bremsdruck auszuwählen.

8. Bremssteuereinrichtung (14) nach Anspruch 7, wobei das Schaltelement eingerichtet ist, zwischen einem Antischlupfregeldruck und einem reduzierten Antischlupfregeldruck auszuwählen.

9. Bremssteuereinrichtung (14) nach einem der vorstehenden Ansprüche, umfassend ein Doppelabsperrventil (42), das eingerichtet ist, den weiteren Bremsdruck (38, 40) zwischen der Bremssteuerschaltung und der Anfahrhilfsschaltung (40, 42) über die pneumatische Verbindung zu leiten, wenn der weitere Bremsdruck (38, 40) an die zwei Fahrzeugbremsen (26) gleichzeitig angelegt ist.

10. Nutzfahrzeug umfassend ein Fahrzeugrad (12), eine Fahrzeugbremse (26) zum Abbremsen des Fahrzeugrades (12) und eine Bremssteuereinrichtung (14) nach einem der vorstehenden Ansprüche zum Ansteuern der Fahrzeugbremse (26).

## Claims

1. Brake control system (14) for a utility vehicle with a trailer, comprising:
- a pneumatic brake control circuit with a vehicle pressure path for emitting a brake pressure (34, 38) to a vehicle brake (26) that brakes the utility vehicle on the basis of a desired specification (20) by a driver of the utility vehicle and with a trailer pressure path (28) for emitting the brake pressure (34) to a trailer brake that brakes the trailer on the basis of the said desired specification (20), and
- a pneumatic start-assist circuit (42, 44) for emitting a further brake pressure (40) to a trailer brake of the trailer on the basis of a speed of the utility vehicle,
**characterised in that**
- the pneumatic start-assist circuit (42, 44) is pneumatically connected to the trailer pressure path (28) of the pneumatic brake control circuit.

2. Brake control system (14) according to Claim 1, comprising a shuttle valve (36) for emitting the brake pressure (34, 38) or the further brake pressure (38, 40) to the trailer brake on the basis of its level.

3. Brake control system (14) according to Claims 1 or 2, wherein the start-assist circuit (42, 44) comprises a pressure valve (44) which is provided in order adjust a level of the further brake pressure (38, 40).

4. Brake control system (14) according to Claim 3, wherein the pressure valve (44) is an actuator of an anti-slip control system.

5. Brake control system (14) according to any of the preceding claims, comprising a switching element (24, 36) designed to pass on the further brake control pressure (38, 40) to the vehicle brake (26).

6. Brake control system (14) according to Claim 5, wherein the switching element (24, 36) is designed to control two anti-lock system valves (24) on two vehicle brakes of an axle (6) simultaneously.

7. Brake control system (14) according to Claims 5 or 6, wherein the switching element (24) comprises a shuttle valve, which is designed to select the further brake pressure.

8. Brake control system (14) according to Claim 7, wherein the switching element is designed to choose between an anti-slip control pressure and a lower anti-slip control pressure.

9. Brake control system (14) according to any of the preceding claims, comprising a double shut-off valve (42) which is designed to pass the said further brake pressure (38, 40) between the brake control circuit and the start-assist circuit (40, 42) via the pneumatic connection when the further brake pressure (38, 40) is applied to the two vehicle brakes (26) simultaneously.

10. Utility vehicle comprising a vehicle wheel (12), a vehicle brake (26) for braking the vehicle wheel (12) and a brake control system (14) according to any of the preceding claims for controlling the vehicle brake (26).

## Revendications

1. Dispositif (14) de commande de frein pour un véhicule utilitaire ayant une remorque, comprenant :
- un circuit pneumatique de commande de frein ayant un trajet de pression de véhicule pour donner une pression (34, 38) de frein à un frein (26) de véhicule freinant le véhicule utilitaire reposant sur une prescription (20) de consigne d'un conducteur du véhicule utilitaire et comprenant un trajet (28) de pression de remorque pour donner la pression (34) de frein à un frein de remorque freinant la remorque reposant sur la prescription (20) de consigne, et
- un circuit (42, 44) pneumatique auxiliaire de démarrage pour donner une autre pression (40) de frein à un frein de remorque de la remorque reposant sur une vitesse du véhicule utilitaire,
**caractérisé en ce que**
- le circuit (42, 44) pneumatique auxiliaire de démarrage est relié pneumatiquement au trajet (28) de pression de remorque du circuit pneumatique de commande de frein.

2. Dispositif (14) de commande de frein suivant la revendication 1, comprenant une soupape (36) à deux voies pour donner la pression (34, 38) de frein ou l'autre pression (38, 40) de frein au frein de remorque sur la base de son niveau.

3. Dispositif (14) de commande de frein suivant la revendication 1 ou 2, dans lequel le circuit (42, 44) auxiliaire de démarrage comprend une soupape (44) de pression prévue pour régler un niveau de l'autre pression (38, 40) de frein.

4. Dispositif (14) de commande de frein suivant la revendication 3, dans lequel la soupape (44) de pression est un actionneur d'un antipatinage.

5. Dispositif (14) de commande de frein suivant l'une des revendications précédentes, comprenant un élément (24, 36) de commutation conçu pour acheminer l'autre pression (38, 40) de commande de frein au frein (26) du véhicule.

6. Dispositif (14) de commande de frein suivant la revendication 5, dans lequel l'élément (24, 36) de commutation est conçu pour commander en même temps deux soupapes (24) de système d'antiblocage sur deux freins (26) de véhicule d'un essieu (6) du véhicule utilitaire.

7. Dispositif (14) de commande de frein suivant l'une des revendications 5 ou 6, dans lequel l'élément (24) de commutation comprend une soupape à deux voies conçue pour sélectionner l'autre pression de frein.

8. Dispositif (14) de commande de frein suivant la revendication 7, dans lequel l'élément de commutation est conçu pour choisir entre une pression d'antipatinage et une pression d'antipatinage réduite.

9. Dispositif (14) de commande de frein suivant l'une des revendications précédentes, comprenant une vanne (42) d'arrêt double conçue pour conduire, par la liaison pneumatique, l'autre pression (38, 40) de frein entre le circuit de commande de frein et le circuit (40, 42) auxiliaire de démarrage, si l'autre pression (38, 40) de frein est appliquée en même temps aux deux freins (26) du véhicule.

10. Véhicule utilitaire comprenant une roue (12) de véhicule, un frein (26) de véhicule pour freiner la roue (12) du véhicule et un dispositif (14) de commande de frein suivant l'une des revendications précédentes pour commander le frein (26) du véhicule.
